# EUROPEAN PATENT SPECIFICATION

(11) **EP 2 889 749 B1**
(45) Date of publication and mention of the grant of the patent: **02.05.2018**
(21) Application number: 14200484.5
(22) Date of filing: 29.12.2014
(51) Int. Cl.: G06F 3/0488, G06F 3/0484

(54) **Electronic device and method for displaying user interface thereof**
Elektronische Vorrichtung und Verfahren zur Anzeige einer Benutzerschnittstelle dafür
Dispositif électronique et procédé d'affichage d'une interface utilisateur correspondante

(30) Priority: 30.12.2013 KR 20130167570
(43) Date of publication of application: 01.07.2015
(73) Proprietor: Samsung Electronics Co., Ltd., Gyeonggi-do 443-742 (KR)
(72) Inventor: Jong, Inwon, 443-742 Gyeonggi-do (KR); Kwon, Ohyoon, 443-742 Gyeonggi-do (KR); Moon, Jiyoung, 443-742 Gyeonggi-do (KR); Lee, Hoyoung, 443-742 Gyeonggi-do (KR)
(74) Representative: Nederlandsch Octrooibureau

(56) References cited:
- US-A1- 2004 021 643
- US-A1- 2011 069 012
- US-B1- 8 605 094
- "REVOLVING SELECTION FIELD", IBM TECHNICAL DISCLOSURE BULLETIN, INTERNATIONAL BUSINESS MACHINES CORP. (THORNWOOD), US, vol. 32, no. 10A, 1 March 1990 (1990-03-01), pages 179-181, XP000083216, ISSN: 0018-8689

## Description

### BACKGROUND

### 1. Field of the Invention

The present invention generally relates to a user interface technology for electronic devices, and more particularly, to a technique to intuitively change a displayed object through a touch-based input.

### 2. Description of the Related Art

Recently, many electronic devices offer a user-friendly touch-based interface that allows a user's touch-sensitive manipulations while displaying various objects for indicating information such as time, date, color, or control information. However, when a user desires to change a specific object, there is no information for showing states of the object before and after a change in the object, which may often cause inconvenience to users.

US 2004/021643 A1 relates to a display unit with a touch panel that moves a touch-driven member such as a functional button to a desired position through a touch operation. By touching a draggable icon displayed on a screen with a finger, the icon is changed in color to indicate that the user can drag the icon. Then, by pushing the icon, the icon is changed in size and color to indicate that the user can drag the icon. As by reducing the pushing force to touch on the icon, and moving the finger, the icon is dragged following the finger. As by pushing the icon with the finger at a predetermined position, the icon is set at this position and changed in size and color. When releasing the finger from the icon, the icon is settled at this position.

### SUMMARY

The present invention has been made to solve at least the above-mentioned problems and/or disadvantages and to provide at least the advantages described below. The processor is configured to display at least one object on the display, to detect a touch gesture on the displayed at least one object, to display a proposed object on the display in response to the detected touch gesture, and to replace the displayed at least one object with a specific object located at a touch-released point among the proposed object when the touch gesture is released.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1 illustrates a network environment including an electronic device in accordance with an embodiment of the present invention;
FIG. 2 is a block diagram illustrating a configuration of an electronic device in accordance with an embodiment of the present invention;
FIGS. 3 to 4 illustrate user interface display screens of an electronic device in accordance with an embodiment of the present invention;
FIGS. 5A to 5C illustrate user interface display screens of an electronic device in accordance with another embodiment of the present invention;
FIG. 6 is a flowchart illustrating a method for displaying a user interface of an electronic device in accordance with an embodiment of the present invention;
FIG. 7 illustrates user interface display screens of an electronic device in accordance with yet another embodiment of the present invention;
FIG. 8 is a flow diagram illustrating a method for displaying a user interface of an electronic device in accordance with another embodiment of the present invention; and

### DETAILED DESCRIPTION OF EMBODIMENTS OF THE PRESENT INVENTION

The following description with reference to the accompanying drawings is provided to assist in a comprehensive understanding of various embodiments of the present invention as defined by the claims and their equivalents. It includes various specific details to assist in that understanding but these are to be regarded merely as examples. Accordingly, those of ordinary skill in the art will recognize that various changes and modifications of the embodiments described herein can be made without departing from the scope of the present invention. In addition, descriptions of well-known functions and constructions may be omitted for clarity and conciseness.

The terms and words used in the following description and claims are not limited to their meanings in a dictionary, but, are merely used to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a", "an", and "the" include plural referents unless the context clearly dictates otherwise. Thus, for example, reference to "an object" includes reference to one or more of such objects.

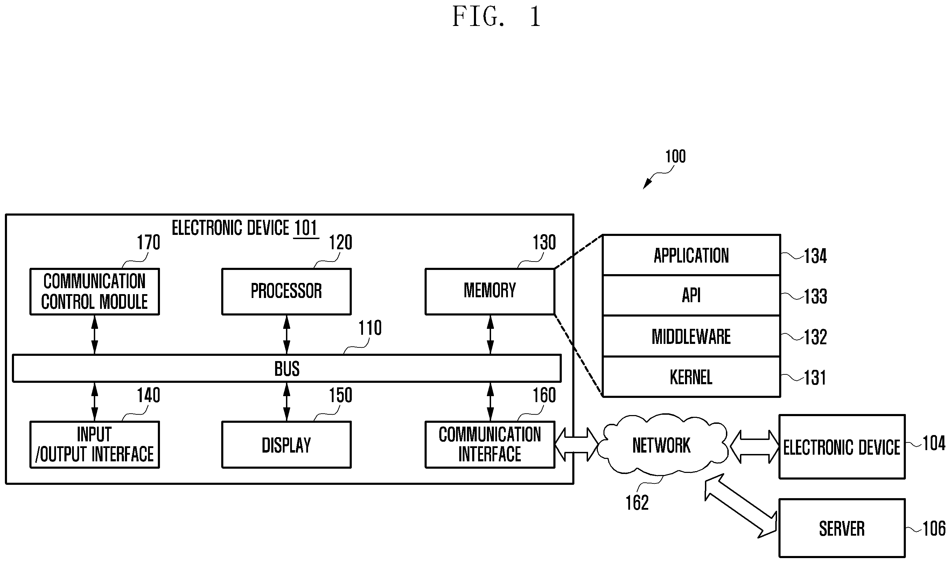

FIG. 1 illustrates a network environment including an electronic device according to an embodiment of the present invention.

Referring to FIG. 1, the electronic device 101 includes a bus 110, a processor 120, a memory 130, an input/output module 140, a display module 150, a communication module 160, and other similar and/or suitable components.

The bus 110 is a circuit which interconnects the above-described elements and delivers a communication (e.g., a control message) between the above-described elements.

The processor 120 receives commands from the above-described other elements (e.g., the memory 130, the input/output module 140, the display module 150, the communication module 160, etc.) through the bus 110, interprets the received commands, and executes a calculation or data processing according to the interpreted other elements (e.g., the input/output module 140, the display module 150, the communication module 160, etc.) or generated by the processor 120 or the other elements. The memory 130 includes programming modules, such as a kernel 131, middleware 132, an Application Programming Interface (API) 133, an application 134, and the like. Each of the above-described programming modules may be implemented in software, firmware, hardware, or a combination of two or more thereof.

The kernel 131 controls or manages system resources (e.g., the bus 110, the processor 120, the memory 130, etc.) used to execute operations or functions implemented by other programming modules (e.g., the middleware 132, the API 133, and the application 134). Also, the kernel 131 provides an interface capable of accessing and controlling or managing the individual elements of the electronic device 101 by using the middleware 132, the API 133, or the application 134.

The middleware 132 serves between the API 133 or the application 134 and the kernel 131 in such a manner that the API 133 or the application 134 communicates with the kernel 131 and exchanges data therewith. Also, in relation to work requests received from one or more applications 134, the middleware 132, for example, performs load balancing of the work requests by using a method of assigning a priority, in which system resources (e.g., the bus 110, the processor 120, the memory 130, etc.) of the electronic device 101 can be used, to at least one of the one or more applications 134.

The API 133 is an interface through which the application 134 is capable of controlling a function provided by the kernel 131 or the middleware 132, and may include, for example, at least one interface or function for file control, window control, image processing, character control, or the like.

The input/output module 140, for example, receives a command or data as input from a user, and delivers the received command or data to the processor 120 or the memory 130 through the bus 110.

The display module 150 displays a video, an image, data, or the like to the user.

The communication module 160 connects communication between another electronic device 104 and the electronic device 101. The communication module 160 supports a predetermined short-range communication protocol (e.g., Wi-Fi, BlueTooth (BT), and Near Field Communication (NFC)), or predetermined network communication 162 (e.g., the Internet, a Local Area Network (LAN), a Wide Area Network (WAN), a telecommunication network, a cellular network, a satellite network, a Plain Old Telephone Service (POTS), or the like). Each of the electronic devices 104 may be a device which is identical (e.g., of an identical type) to or different (e.g., of a different type) from the electronic device 101. Further, the communication module 160 connects communication between a server 164 and the electronic device 101 via the network 162.

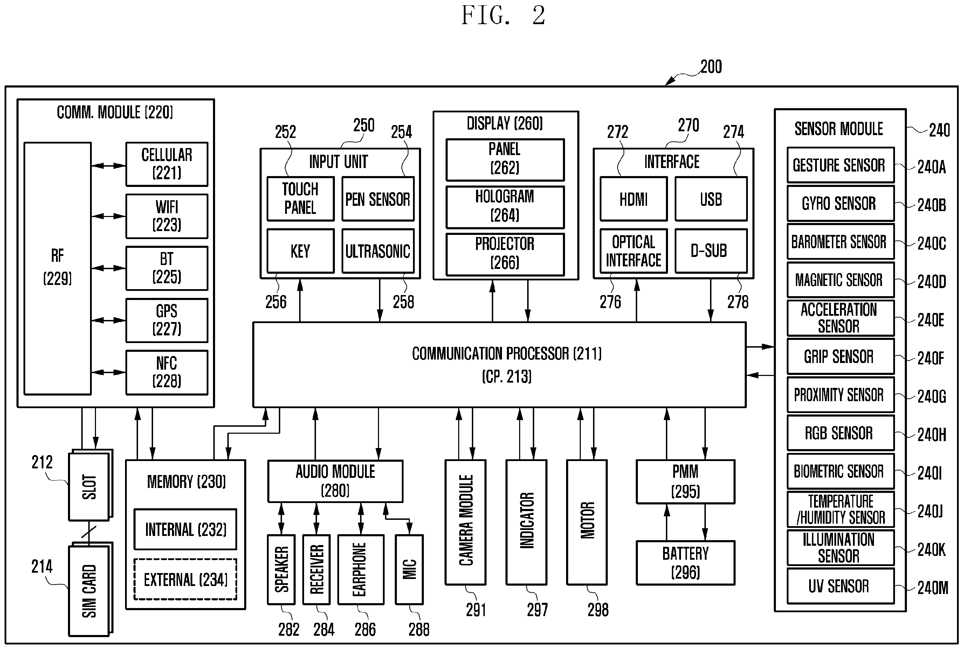

FIG. 2 is a block diagram illustrating a configuration of an electronic device according to an embodiment of the present invention.

The electronic device 200 may be, for example, the electronic device 101 illustrated in FIG. 1.

Referring to FIG. 2, the electronic device 200 includes one or more processors 210, a Subscriber Identification Module (SIM) card 214, a memory 230, a communication module 220, a sensor module 240, a user input module 250, a display module 260, an interface 270, an audio coder/decoder (codec) 280, a camera module 291, a power management module (PMM) 295, a battery 296, an indicator 297, a motor 298 and any other similar and/or suitable components.

The processor 210 (e.g., the processor 120 of FIG. 1) includes one or more Application Processors (APs) 211, or one or more Communication Processors (CPs) 213. The processor 210 may be, for example, the processor 120 illustrated in FIG. 1. The AP 211 and the CP 213 are illustrated as being included in the processor 210 in FIG. 2, but may be included in different Integrated Circuit (IC) packages separately. According to an embodiment of the present invention, the AP 211 and the CP 213 may be included in one IC package.

The AP 211 executes an Operating System (OS) or an application program, and thereby controls multiple hardware or software elements connected to the AP 211 and performs processing of and arithmetic operations on various data including multimedia data. The AP 211 may be implemented by, for example, a System on Chip (SoC). According to an embodiment of the present invention, the processor 210 may further include a Graphical Processing Unit (GPU) (not illustrated).

The CP 213 manages a data line and converts a communication protocol in the case of communication between the electronic device (e.g., the electronic device 101 of FIG. 1) including the electronic device 200 and different electronic devices connected to the electronic device through the network. The CP 213 may be implemented by, for example, a SoC. According to an embodiment of the present invention, the CP 213 performs at least some of multimedia control functions. The CP 213, for example, distinguishes and authenticates a terminal in a communication network by using a subscriber identification module (e.g., the SIM card 214). Also, the CP 213 provides the user with services, such as a voice telephony call, a video telephony call, a text message, packet data, and the like.

The CP 213 controls the transmission and reception of data by the communication module 220. In FIG. 2, the elements such as the CP 213, the power management module 295, the memory 230, and the like are illustrated as elements separate from the AP 211. However, according to an embodiment of the present invention, the AP 211 may include at least some (e.g., the CP 213) of the above-described elements.

According to an embodiment of the present invention, the AP 211 or the CP 213 loads, to a volatile memory, a command or data received from at least one of a non-volatile memory and other elements connected to each of the AP 211 and the CP 213, and processes the loaded command or data. Also, the AP 211 or the CP 213 stores, in a non-volatile memory, data received from or generated by at least one of the other elements.

The SIM card 214 may be a card implementing a subscriber identification module, and may be inserted into a slot 212 formed in a particular portion of the electronic device 101. The SIM card 214 may include unique identification information (e.g., Integrated Circuit Card IDentifier (ICCID)) or subscriber information (e.g., International Mobile Subscriber Identity (IMSI)).

The memory 230 includes an internal memory 232 and an external memory 234. The memory 230 may be, for example, the memory 130 illustrated in FIG. 1. The internal memory 232 may include, for example, at least one of a volatile memory (e.g., a Dynamic RAM (DRAM), a Static RAM (SRAM), a Synchronous Dynamic RAM (SDRAM), etc.), and a non-volatile memory (e.g., a One Time Programmable ROM (OTPROM), a Programmable ROM (PROM), an Erasable and Programmable ROM (EPROM), an Electrically Erasable and Programmable ROM (EEPROM), a mask ROM, a flash ROM, a Not AND (NAND) flash memory, a Not OR (NOR) flash memory, etc.). According to an embodiment of the present invention, the internal memory 232 may be in the form of a Solid State Drive (SSD). The external memory 224 may further include a flash drive, for example, a Compact Flash (CF), a Secure Digital (SD), a Micro-Secure Digital (Micro-SD), a Mini-Secure Digital (Mini-SD), an extreme Digital (xD), a memory stick, or the like.

The communication module 220 may include, for example, a cellular part 221, a Wi-Fi part 233, a BT part 235, a Global Positioning System (GPS) part 237, a NFC part 239, or a Radio Frequency (RF) module 229. The communication module 220 may be, for example, the communication module 160 illustrated in FIG. 1. For example, the communication module 220 provides a wireless communication function by using a radio frequency. Alternatively, the communication module 220 may include a network interface (e.g., a LAN card), a modulator/demodulator (modem), or the like for connecting the electronic device 200 to a network (e.g., the Internet, a LAN, a WAN, a telecommunication network, a cellular network, a satellite network, a POTS, or the like).

The RF module 229 is used for transmission and reception of data, for example, transmission and reception of RF signals or called electronic signals. Although not illustrated, the RF unit 229 may include, for example, a transceiver, a Power Amplifier Module (PAM), a frequency filter, a Low Noise Amplifier (LNA), or the like. The RF module 234 may further include a component for transmitting and receiving electromagnetic waves in a free space in a wireless communication, for example, a conductor, a conductive wire, or the like.

The sensor module 240 includes, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a Red, Green and Blue (RGB) sensor 240H, a biometric sensor 240I, a temperature/humidity sensor 240J, an illuminance sensor 240K, and a Ultra Violet (UV) sensor 240M. The sensor module 240 measures a physical quantity or may sense an operating state of the electronic device 101, and converts the measured or sensed information to an electrical signal. Alternatively, the sensor module 240 may include, for example, an E-nose sensor (not illustrated), an ElectroMyoGraphy (EMG) sensor, an ElectroEncephaloGram (EEG) sensor, an ElectroCardioGram (ECG) sensor, a fingerprint sensor, and the like. The sensor module 240 may further include a control circuit for controlling one or more sensors included therein. The processor 210 may control the sensor module 240.

The user input module 250 includes a touch panel 252, a pen sensor 254 (e.g., a digital pen sensor), keys 256, and an ultrasonic input unit 258. The user input module 250 may be, for example, the user input module 140 illustrated in FIG. 1. The touch panel 252 recognizes a touch input in at least one of, for example, a capacitive scheme, a resistive scheme, an infrared scheme, and an acoustic wave scheme. The touch panel 252 may further include a controller. In the capacitive type, the touch panel 252 is capable of recognizing proximity as well as a direct touch. The touch panel 252 may further include a tactile layer. In this event, the touch panel 252 provides a tactile response to the user.

The pen sensor 254 (e.g., a digital pen sensor), for example, may be implemented by using a method identical or similar to a method of receiving a touch input from the user, or by using a separate sheet for recognition. For example, a key pad or a touch key may be used as the keys 256. The ultrasonic input unit 258 enables the terminal to sense a sound wave by using a microphone (e.g., a microphone 288) of the terminal through a pen generating an ultrasonic signal, and to identify data. The ultrasonic input unit 258 is capable of wireless recognition. According to an embodiment of the present invention, the electronic device 200 may receive a user input from an external device (e.g., a network, a computer, or a server), which is connected to the communication module 220, through the communication module 220.

The display module 260 includes a panel 262 or a hologram 264. The display module 260 may be, for example, the display module 150 illustrated in FIG. 1. The panel 262 may be, for example, a Liquid Crystal Display (LCD) and an Active Matrix Organic Light Emitting Diode (AM-OLED) display, and the like. The panel 262 may be implemented so as to be, for example, flexible, transparent, or wearable. The panel 262 may include the touch panel 252 and one module. The hologram 264 may display a three-dimensional image in the air by using interference of light. According to an embodiment of the present invention, the display module 260 may further include a control circuit for controlling the panel 262 or the hologram 264. The display module 260 may further include a projector 266.

The interface 270 includes, for example, a High-Definition Multimedia Interface (HDMI) 272, a Universal Serial Bus (USB) 274, an optical interface276, and a D-subminiature (D-sub) 278. Alternatively, the interface 270 may include, for example, SD/Multi-Media Card (MMC) (not illustrated) or Infrared Data Association (IrDA) (not illustrated).

The audio codec 280 bidirectionally converts between a voice and an electrical signal. The audio codec 280 converts voice information, which is input to or output from the audio codec 280, through, for example, a speaker 282, a receiver 284, an earphone 286, the microphone 288, or the like.

The camera module 291 captures an image and a moving image. According to an embodiment of the present invention, the camera module 291 may include one or more image sensors (e.g., a front lens or a back lens), an Image Signal Processor (ISP), and a flash LED.

The PMM 295 manages power of the electronic device 200. Although not illustrated, the PMM 295 may include, for example, a Power Management Integrated Circuit (PMIC), a charger Integrated Circuit (IC), or a battery fuel gauge.

The PMIC may be mounted to, for example, an IC or a SoC semiconductor. Charging methods may be classified into a wired charging method and a wireless charging method.

The charger IC charges a battery, and prevents an overvoltage or an overcurrent from a charger to the battery. According to an embodiment of the present invention, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, etc.) for wireless charging may be added in order to perform the wireless charging.

The battery fuel gauge measures, for example, a residual quantity of the battery 296, or a voltage, a current or a temperature during the charging.

The battery 296 supplies power by generating electricity, and may be, for example, a rechargeable battery.

The indicator 297 indicates particular states of the electronic device 200 or a part (e.g., the AP 211) of the electronic device 200, for example, a booting state, a message state, a charging state, and the like.

The motor 298 converts an electrical signal into a mechanical vibration. Although not illustrated, the electronic device 200 may include a processing unit (e.g., a GPU) for supporting a module TV. The processing unit for supporting a module TV may process media data according to standards such as, for example, Digital Multimedia Broadcasting (DMB), Digital Video Broadcasting (DVB), media flow, and the like. Each of the above-described elements of the electronic device 200 according to an embodiment of the present invention may include one or more components, and the name of the relevant element may change depending on the type of electronic device. The electronic device 200 according to an embodiment of the present invention may include at least one of the above-described elements. Some of the above-described elements may be omitted from the electronic device 200, or the electronic device 200 may further include additional elements. Also, some of the elements of the electronic device 200 according to an embodiment of the present invention may be combined into one entity, which may perform functions identical to those of the relevant elements before the combination.

The term "module" used in the present disclosure may refer to, for example, a unit including one or more combinations of hardware, software, and firmware. The term "module" may be interchangeable with a term, such as "unit", "logic", "logical block", "component", "circuit", or the like. The term "module" may be a minimum unit of a component formed as one body or a part thereof. The term "module" may be a minimum unit for performing one or more functions or a part thereof. The term "module" may be implemented mechanically or electronically. For example, the term "module" according to an embodiment of the present invention may include at least one of an Application-Specific Integrated Circuit (ASIC) chip, a Field-Programmable Gate Array (FPGA), and a programmable-logic device for performing certain operations which have been known or are to be developed in the future.

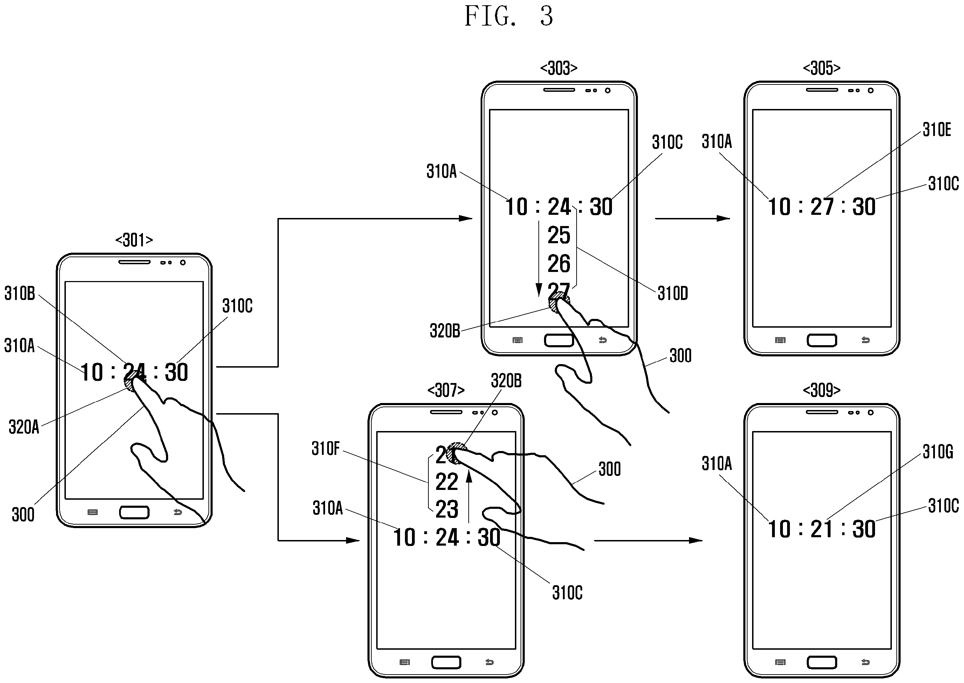

FIG. 3 illustrates user interface display screens of the electronic device 200 in accordance with an embodiment of the present invention.

At screen 301, the electronic device (e.g., 200 of FIG. 2) displays on the display (e.g., 260 of FIG. 2) at least one object 310A, 310B, or 310C indicating time information. An object indicating time information may be displayed, for example, as the hour 310A, the minute 310B, and the second 310C. Although an object indicating time information is displayed as the hour, minute, and second in this embodiment, any alternative embodiment is possible such as displaying as the hour, minute, and AM/PM. A user's finger 300 touches one object 310B among the objects 310A, 310B, and 310C indicating time information such that a touch input 320A occurs. The electronic device then detects the touch input 320A on or around the object 310B and selects the touched object 310B. That is, the electronic device displays the hour object 310A, the minute object 310B, and the second object 310C on the touch screen, and, when the touch input 320A (e.g., a tap input) on or around the minute object 310B is detected, determines that the minute object 310B is selected.

At screen 303, the electronic device detects a touch gesture 320B with regard to one object 310B among the objects 310A, 310B, and 310C indicating time information. When the touch gesture 320B by the user's finger 300 is detected, the electronic device displays a proposed object 310D in response to the detected touch gesture 320B. In one embodiment of the present invention, if the touch gesture 320B (e.g., a drag input or a swipe input) is detected, the electronic device displays the proposed object 310D in the direction of the detected touch gesture 320B. For example, if a drag or swipe input 320B is detected in the downward direction from the selected object 310B, the electronic device displays the proposed object 310D to be arranged in the vertical direction along the screen. In this case, the number displayed as the proposed object 310D is greater than the number displayed as the selected object 310B, and two or more proposed objects 310D may be arranged (e.g., two or more numbers are displayed as two or more proposed objects 310D). Additionally, the electronic device may update the proposed object 310D in proportion to a duration time of the touch gesture 320B or a travel distance of the touch gesture 320B. Also, the electronic device may dispose at least one proposed object 310D from a starting point to an ending point of the touch gesture 320B. The starting point of the touch gesture 320B may be the above-described touch input 320A. The proposed object 310D may be displayed as an afterimage or trace. A displaying speed of the proposed object 310D may depend on the speed of the touch gesture 320B. For example, if the drag or swipe input 320B by the user's finger 300 is fast, the electronic device may quickly display the proposed object 310D. If the drag or swipe input 320B by the user's finger 300 is slow, the electronic device may slowly display the proposed object 310D.

At screen 305, the electronic device replaces the previously selected object 310B with an object 310E located at a touch-released point among the proposed objects 310D. For example, as shown at screens 301, 303, and 305, the electronic device displays three objects for indicating time information "10:24:30" in which "10", "24", and "30" are the hour object, the minute object and the second object, respectively. When any touch input is detected on or around the minute object "24" that is currently displayed, the electronic device determines that the minute object "24" is selected. Further, when a drag or swipe input is detected in the downward direction from the selected minute object "24", the electronic device displays proposed minute objects "25", "26" and "27" which are gradually increasing numbers from the selected minute object "24". A displaying speed of these proposed minute objects may be proportional to the speed of the drag or swipe input. If the touch gesture is released from one proposed minute object "27", the electronic device replaces the currently displayed minute object "24" with the new minute object "27".

At screen 307, the electronic device detects a touch gesture 320B with regard to one object 310B among the objects 310A, 310B and 310C indicating time information. When the touch gesture 320B by the user's finger 300 is detected, the electronic device displays a proposed object 310F in response to the detected touch gesture 320B. In one embodiment of the present invention, if the touch gesture 320B (e.g., a drag input or a swipe input) is detected, the electronic device displays the proposed object 310F in the direction of the detected touch gesture 320B. For example, if a drag or swipe input 320B is detected in the upward direction from the selected object 310B, the electronic device displays the proposed object 310F to be arranged in the vertical direction along the screen. In this case, the number displayed as the proposed object 310F is smaller than the number displayed as the selected object 310B, and two or more proposed objects 310F may be arranged (e.g., two or more numbers are displayed as two or more proposed objects 310F). Additionally, the electronic device may update the proposed object 310F in proportion to a duration time of the touch gesture 320B or a travel distance of the touch gesture 320B. Also, the electronic device may dispose at least one proposed object 310F from a starting point to an ending point of the touch gesture 320B. The starting point of the touch gesture 320B may be the above-described touch input 320A. The proposed object 310F may be displayed as an afterimage or trace. A displaying speed of the proposed object 310F may depend on the speed of the touch gesture 320B. For example, if the drag or swipe input 320B by the user's finger 300 is fast, the electronic device may quickly display the proposed object 310F. If the drag or swipe input 320B by the user's finger 300 is slow, the electronic device may slowly display the proposed object 310F.

At screen 309, the electronic device replaces the previously selected object 310B with an object 310G located at a touch-released point among the proposed objects 310F. For example, as shown at screens 301, 307, and 309, the electronic device displays three objects for indicating time information "10:24:30" in which "10", "24", and "30" are the hour object, the minute object and the second object, respectively. When any touch input is detected on or around the minute object "24" that is currently displayed, the electronic device determines that the minute object "24" is selected. Further, when a drag or swipe input is detected in the upward direction from the selected minute object "24", the electronic device displays the proposed minute objects "23", "22" and "21" which are gradually decreasing numbers from the selected minute object "24". A displaying speed of these proposed minute objects may be proportional to the speed of the drag or swipe input. If the touch gesture is released from one proposed minute object "21", the electronic device replaces the currently displayed minute object "24" with the new minute object "21 ".

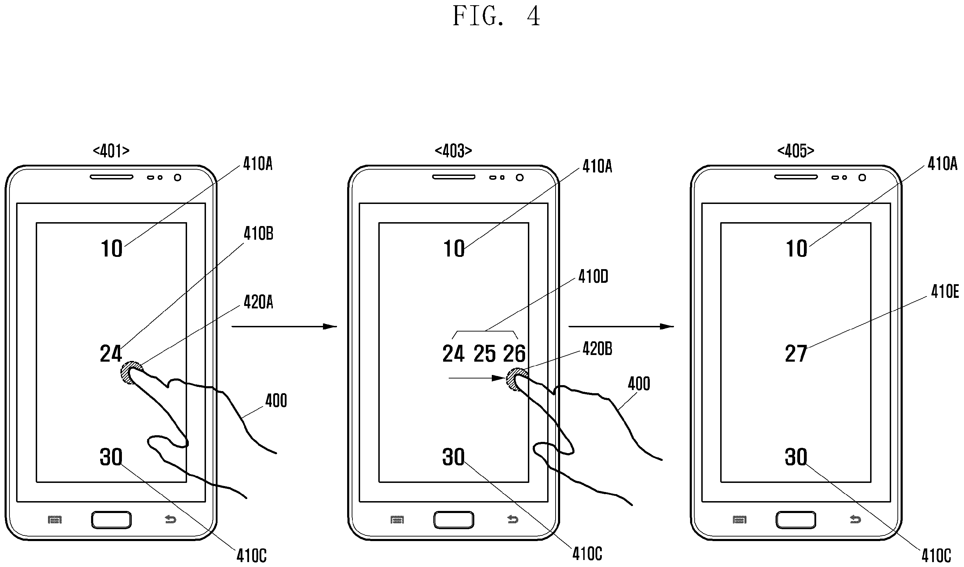

FIG. 4 illustrates user interface display screens of the electronic device in accordance with an embodiment of the present invention.

At screen 401, the electronic device (e.g., 200 of FIG. 2) may display on the display (e.g., 260 of FIG. 2) at least one object 410A, 410B, or 410C indicating time information vertically. An object indicating time information may be displayed, for example, as the hour 410A, the minute 410B, and the second 410C. Although an object indicating time information is displayed as the hour, minute, and second in this embodiment, any alternative embodiment is possible such as displaying as the hour, minute, and AM/PM. A user's finger 400 touches one object 410B among the objects 410A, 410B, and 410C indicating time information such that a touch input 420A occurs. Then the electronic device detects the touch input 420A on or around the object 410B and selects the touched object 410B. That is, the electronic device displays the hour object 410A, the minute object 410B, and the second object 410C on the touch screen, and, when the touch input 420A (e.g., a tap input) on or around the minute object 410B is detected, determines that the minute object 410B is selected.

At screen 403, the electronic device detects a touch gesture 420B with regard to one object 410B among the objects 410A, 410B, and 410C indicating time information. When the touch gesture 420B by the user's finger 400 is detected, the electronic device displays a proposed object 410D in response to the detected touch gesture 420B. In one embodiment of the present invention, if the touch gesture 420B (e.g., a drag input or a swipe input) is detected, the electronic device displays the proposed object 410D in the direction of the detected touch gesture 420B. For example, if a drag or swipe input 420B is detected in the rightward direction from the selected object 410B, the electronic device displays the proposed object 410D to be arranged in the horizontal direction along the screen. In this case, the number displayed as the proposed object 410D is greater than the number displayed as the selected object 410B, and two or more proposed objects 410D may be arranged (e.g., two or more numbers are displayed as two or more proposed objects 410D). Additionally, the electronic device may update the proposed object 410D in proportion to a duration time of the touch gesture 420B or a travel distance of the touch gesture 420B. Also, the electronic device may dispose at least one proposed object 410D from a starting point to an ending point of the touch gesture 420B. The proposed object 410D may be displayed as an afterimage or trace. A displaying speed of the proposed object 410D may depend on the speed of the touch gesture 420B. For example, if the drag or swipe input 420B by the user's finger 400 is fast, the electronic device may quickly display the proposed object 410D. If the drag or swipe input 420B by the user's finger 400 is slow, the electronic device may slowly display the proposed object 410D.

At screen 405, the electronic device replaces the previously selected object 410B with an object 410E located at a touch-released point among the proposed objects 410D. For example, as shown at screens 401, 403, and 405, the electronic device displays three objects for indicating time information "10:24:30" in which "10", "24", and "30" are the hour object, the minute object, and the second object, respectively. When any touch input on or around the minute object "24" that is currently displayed is detected, the electronic device determines that the minute object "24" is selected. Further, when a drag or swipe input is detected in the rightward direction from the selected minute object "24", the electronic device displays the proposed minute objects "25", "26" and "27" which are gradually increasing numbers from the selected minute object "24". If the drag or swipe input is detected in the leftward direction from the selected minute object "24", the electronic device displays the proposed minute objects "23", "22", and "21" which are gradually decreasing numbers from the selected minute object "24". A displaying speed of these proposed minute objects may be proportional to the speed of the drag or swipe input. If the touch gesture is released from one proposed minute object "27", the electronic device replaces the currently displayed minute object "24" with the new minute object "27".

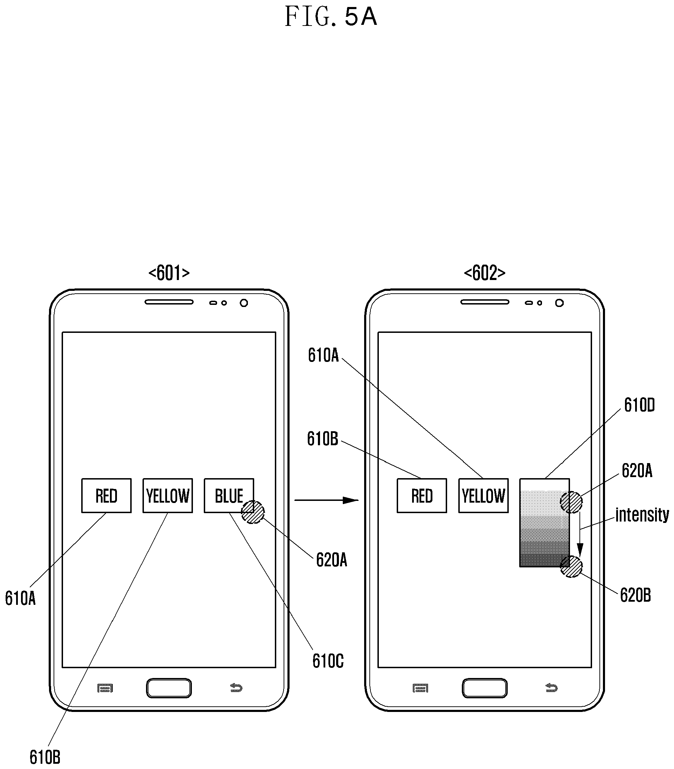

FIGS 5A to 5C illustrate user interface display screens of the electronic device in accordance with another embodiment of the present invention.

FIG. 5A illustrates user interface display screens regarding a change in at least one object indicating color information in the electronic device.

At screen 601, the electronic device (e.g., 200 of FIG. 2) may display on the display (e.g., 260 of FIG. 2) at least one object 610A, 610B, or 610C indicating color information. An object indicating color information may be displayed, for example, as red 610A, yellow 610B, and blue 610C. Although an object indicating color information is displayed as red, yellow, and blue in this embodiment, any alternative embodiment for displaying an object based on natural colors is also possible. A user touches one object 610C among the objects 610A, 610B, and 610C indicating color information such that a touch input 620A occurs. The electronic device then detects the touch input 620A on or around the object 610C and selects the touched object 610C. That is, the electronic device displays the red object 610A, the yellow object 610B, and the blue object 610C on the touch screen, and, when the touch input 620A (e.g., a tap input) on or around the blue object 610C is detected, determines that the blue object 610C is selected.

At screen 602, the electronic device detects a touch gesture 620B with regard to one object 610C among the objects 610A, 610B, and 610C indicating color information. When the touch gesture 620B by a user is detected, the electronic device displays a proposed object 610D in response to the detected touch gesture 620B. In one embodiment of the present invention, if the touch gesture 620B (e.g., a drag input or a swipe input) is detected, the electronic device displays the proposed object 610D in the direction of the detected touch gesture 620B. For example, if a drag or swipe input 620B is detected in the downward direction (or upward, rightward or leftward direction in alternative embodiments) from the selected object 610C, the electronic device displays the proposed object 610D to be arranged in the vertical direction along the screen. Additionally, the electronic device may update the proposed object 610D in proportion to a travel distance of the touch gesture 620B. For example, the electronic device may dispose at least one proposed object 610D from a starting point to an ending point of the touch gesture 620B. Depending on the direction of the touch gesture, the intensity of the proposed object 610D may be higher or lower than that of the selected object 610C.

In one embodiment of the present invention, a displaying speed of the proposed object 610D may depend on the speed of the touch gesture 620B. The electronic device may replace the previously selected object 610C with an object located at a touch-released point among the proposed objects 610D.

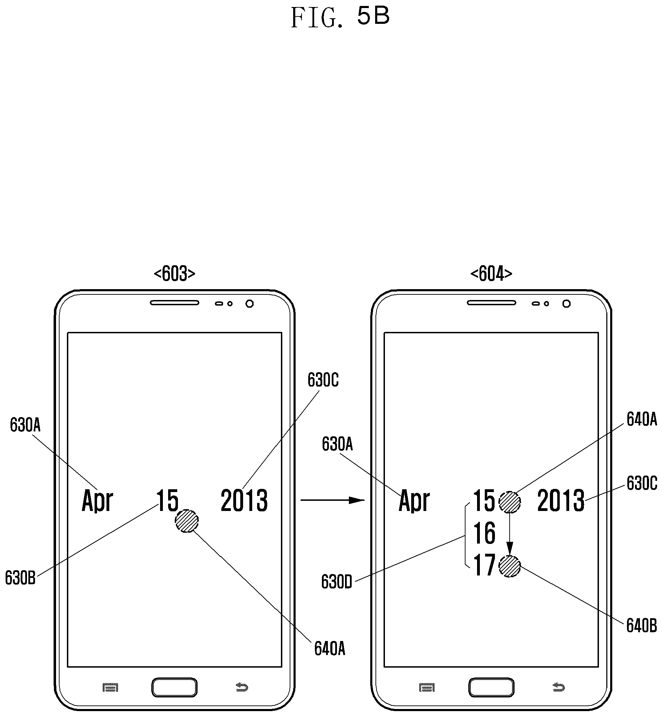

FIG. 5B illustrates user interface display screens regarding a change in at least one object indicating date information in the electronic device.

At screen 603, the electronic device (e.g., 200 of FIG. 2) may display on the display (e.g., 260 of FIG. 2) at least one object 630A, 630B and 630C indicating date information. An object indicating date information may be displayed, for example, as month 630A, day 630B, and year 630C. The date information may be similar to the time information described above in FIGS. 3 to 4. Although an object indicating date information is displayed as month, day and year in this embodiment, any alternative embodiment for displaying a date is also possible. A user touches one object 630B among the objects 630A, 630B and 630C indicating date information such that a touch input 640A occurs. The electronic device then detects the touch input 640A on or around the object 630B and selects the touched object 630B. That is, the electronic device displays the month object 630A, the day object 630B, and the year object 630C on the touch screen, and, when the touch input 640A (e.g., a tap input) on or around the day object 630B is detected, determines that the day object 630B is selected.

At screen 604, the electronic device detects a touch gesture 640B with regard to one object 630B among the objects 630A, 630B and 630C indicating date information. When the touch gesture 640B by a user is detected, the electronic device displays a proposed object 630D in response to the detected touch gesture 640B. In one embodiment of the present invention, if the touch gesture 640B (e.g., a drag input or a swipe input) is detected, the electronic device displays the proposed object 630D in the direction of the detected touch gesture 640B. Additionally, the electronic device may update the proposed object 630D in proportion to a travel distance of the touch gesture 640B. For example, the electronic device may dispose at least one proposed object 630D from a starting point to an ending point of the touch gesture 640B. For example, if a drag or swipe input 640B is detected in the downward direction (or upward, rightward or leftward direction in alternative embodiments) from the selected object 630B, the electronic device displays the proposed object 630D to be arranged in the vertical direction along the screen. Depending on the direction of the touch gesture, the intensity or any other attribute thereof, the proposed object 630D may be varied in comparison with the selected object 630B.

In one embodiment of the present invention, a displaying speed of the proposed object 630D may depend on the speed of the touch gesture 640B. The electronic device may replace the previously selected object 630B with an object located at a touch-released point among the proposed objects 630D.

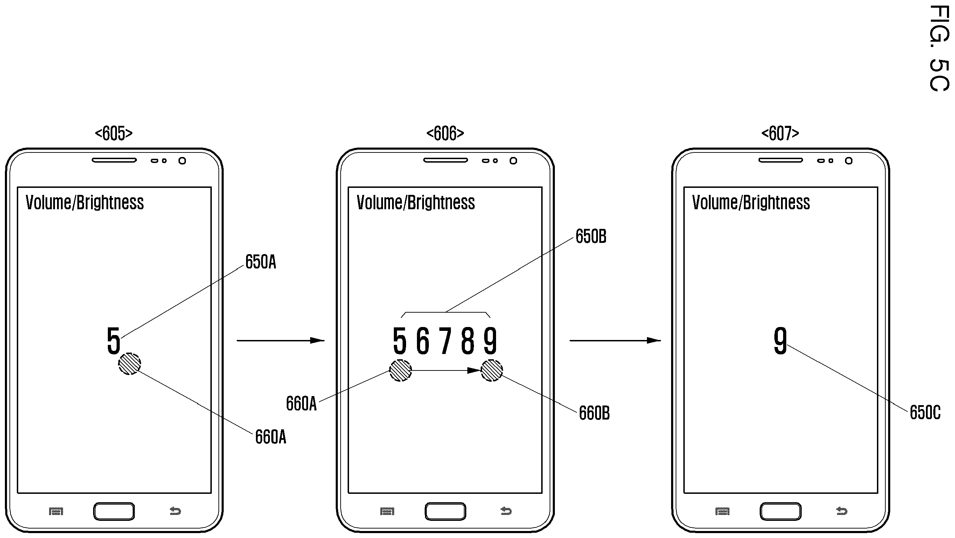

FIG. 5C illustrates user interface display screens regarding a change in at least one object indicating control information in the electronic device.

At screen 605, the electronic device (e.g., 200 of FIG. 2) may display on the display (e.g., 260 of FIG. 2) at least one object 650A indicating control information. An object indicating control information may be displayed as numerals indicating, for example, a volume or brightness. A user touches the object 650A indicating control information such that a touch input 660A occurs. The electronic device then detects the touch input 660A on or around the object 650A and determines that the object 650A indicating control information is selected.

At screen 606, the electronic device detects a touch gesture 660B with regard to the object 650A indicating control information. When the touch gesture 660B by a user is detected, the electronic device displays a proposed object 650B in response to the detected touch gesture 660B. In one embodiment of the present invention, if the touch gesture 660B (e.g., a drag input or a swipe input) is detected, the electronic device displays the proposed object 650B in the direction of the detected touch gesture 660B. Additionally, the electronic device may update the proposed object 650B in proportion to a travel distance of the touch gesture 660B. Also, the electronic device may dispose at least one proposed object 650B from a starting point to an ending point of the touch gesture 660B. For example, if a drag or swipe input 660B is detected in the rightward direction (or upward, downward or leftward direction in alternative embodiments) from the selected object 650A, the electronic device displays the proposed object 650B to be arranged in the horizontal direction along the screen.

At screen 607, a displaying speed of the proposed object 650B may depend on the speed of the touch gesture 660B. The electronic device replaces the previously selected object 650A with an object located at a touch-released point among the proposed objects 650B.

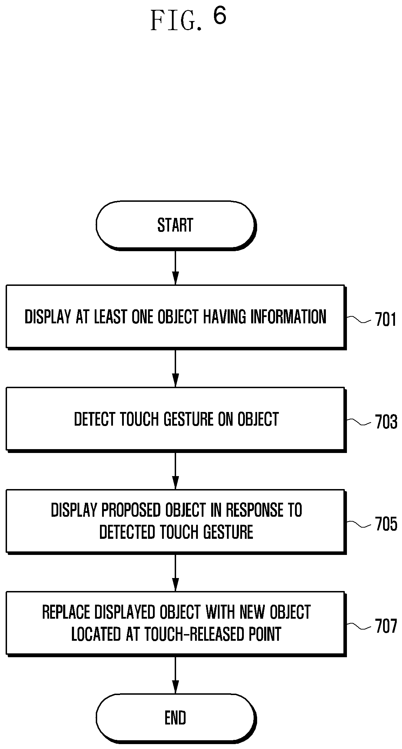

FIG. 6 is a flowchart illustrating a method for displaying a user interface of the electronic device in accordance with an embodiment of the present invention.

At step 701, the electronic device (e.g., 200 of FIG. 2) may display at least one object indicating specific information on the display (e.g., 260 of FIG. 2) under the control of the processor 210. For example, the specific information may be one of time, color, date, and control information.

At step 703, the electronic device detects a touch gesture on or around the touch panel (e.g., 252 of FIG. 2) with regard to at least one object indicating specific information displayed on the display 260. The touch gesture may be a touch input such as a tap action. When a touch gesture is detected with regard to at least one object, the electronic device determines that a specific object located at a starting point of the detected touch gesture is selected.

At step 705, the electronic device displays at least one proposed object on the display 260 in response to the touch gesture detected through the touch panel 252. For example, the electronic device may display the proposed objects in proportion to a travel distance of the touch gesture such that the proposed objects may be disposed from a starting point to an ending point of the touch gesture. Additionally, the proposed object may be displayed as an afterimage or trace. Also, a displaying speed of the proposed object may depend on the speed of the touch gesture. Further, if a drag or swipe input is detected, as the touch gesture, in a specific direction (e.g., upward, downward, rightward, or leftward) from the selected object, the electronic device may display the proposed object to be arranged in the specific direction along the screen.

At step 707, when the touch gesture is released, the electronic device replaces the previously selected object (i.e., located at a starting point of the touch gesture) with an object located at a touch-released point among the proposed objects.

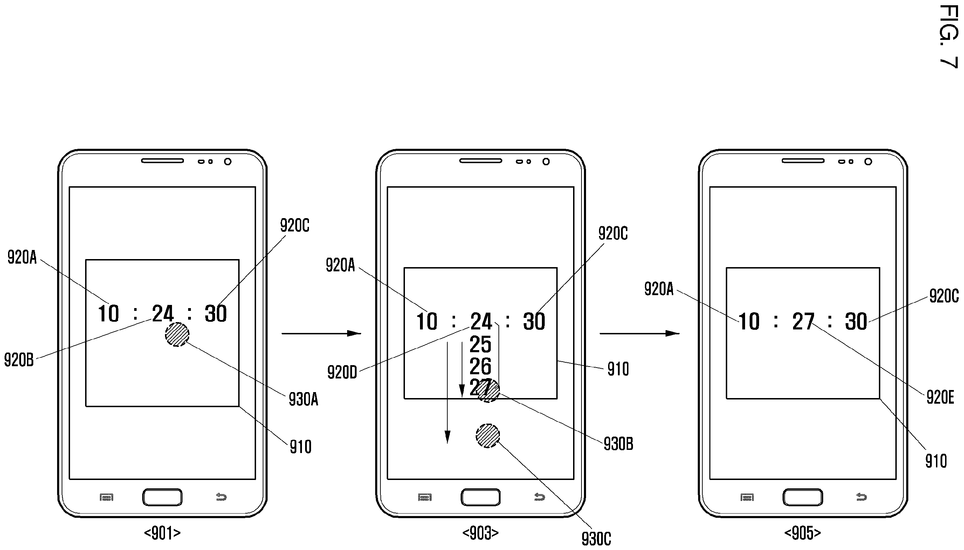

FIG. 7 illustrates user interface display screens of the electronic device in accordance with yet another embodiment of the present invention.

At screen 901, the electronic device (e.g., 200 of FIG. 2) may display on a popup window 910 at least one object 920A, 920B, or 920C indicating time information. The object indicating time information may be displayed, for example, as the hour 920A, the minute 920B, and the second 920C.

Although an object indicating time information is displayed as the hour, minute and second in this embodiment, any alternative embodiment is possible such as displaying as the hour, minute and AM/PM. A user touches one object 920B among the objects 920A, 920B and 920C indicating time information such that a touch input 930A occurs. The electronic device detects the touch input 920A on or around the object 920B and selects the touched object 920B. That is, the electronic device displays the hour object 920A, the minute object 920B, and the second object 920C on the touch screen, and, when the touch input 930A (e.g., a tap input) on or around the minute object 920B is detected, determines that the minute object 920B is selected.

At screen 903, the electronic device detects a touch gesture 930B with regard to one object 920B among the objects 920A, 920B, and 920C indicating time information. When the touch gesture 930B by a user is detected, the electronic device displays a proposed object 920D in response to the detected touch gesture 930B. In one embodiment of the present invention, if the touch gesture 930B (e.g., a drag input or a swipe input) is detected, the electronic device displays the proposed object 920D in the direction of the detected touch gesture 930B. For example, if a drag or swipe input 930B is detected in the downward direction from the selected object 920B, the electronic device displays the proposed object 920D to be arranged in the vertical direction along the screen. In this case, the number displayed as the proposed object 920D is greater than the number displayed as the selected object 920B, and two or more proposed objects 920D may be arranged (e.g., two or more numbers are displayed as two or more proposed objects 920D). Additionally, the electronic device may update the proposed object 920D in proportion to a duration time of the touch gesture 930B or a travel distance of the touch gesture 930B. Also, the electronic device may dispose at least one proposed object 920D from a starting point to an ending point of the touch gesture 930B. The starting point of the touch gesture 930B may be the above-described touch input 930A. The proposed object 920D may be displayed as afterimage or trace. A displaying speed of the proposed object 920D may depend on the speed of the touch gesture 930B. For example, if the drag or swipe input 930B by a user is fast, the electronic device may quickly display the proposed object 920D. If the drag or swipe input 930B by a user is slow, the electronic device may slowly display the proposed object 920D. In another embodiment of the present invention, even though a touch gesture 930C occurs at the outside of the popup window 910 in which the hour object 920A, the minute object 920B and the second object 920C are disposed, the electronic device may display the proposed object 920D in response to the detected touch gesture 930C.

At screen 905, the electronic device replaces the previously selected object 920B with an object 920E located at a touch-released point among the proposed objects 920D. For example, as shown at screens 901, 903, and 905, the electronic device displays three objects indicating time information "10:24:30" in which "10", "24", and "30" are the hour object, the minute object, and the second object, respectively. When any touch input on or around the minute object "24" that is currently displayed is detected, the electronic device determines that the minute object "24" is selected. Further, when a drag or swipe input is detected in the downward direction from the selected minute object "24", the electronic device displays the proposed minute objects "25", "26", and "27" which are gradually increasing numbers from the selected minute object "24". A displaying speed of these proposed minute objects may be proportional to the speed of the drag or swipe input. If the touch gesture is released from one proposed minute object "27", the electronic device replaces the currently displayed minute object "24" with the new minute object "27".

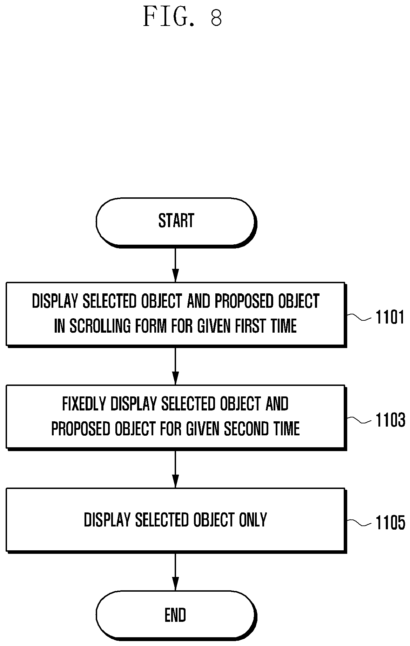

FIG. 8 is a flowchart illustrating a method for displaying a user interface of the electronic device in accordance with another embodiment of the present invention.

At step 1101, the electronic device (e.g., 200 of FIG. 2) displays a specific object, which selected to be displayed, and a proposed object in a scrolling form on the display (e.g., 260 of FIG. 2) for a given time (e.g., for the first time). The proposed object may be associated with the selected object. Also, the proposed object may be a candidate for replacing the selected object in response to a touch gesture. If the electronic device displays the proposed object as well as the selected object in a scrolling form, a user may be informed that the selected object can be replaced by the proposed object through a touch gesture.

At step 1103, the electronic device fixedly displays the selected object and the proposed object for a given time (e.g., for the second time). That is, after the first time described in step 1101 elapses, the electronic device 100 fixedly displays, at step 1103, the selected object and the proposed object for the second time. For example, the proposed object and the selected object may be arranged on a given reference line and remain stationary. After the second time elapses, the electronic device displays only the selected object at step 1105.

While this invention has been particularly shown and described with reference to embodiments thereof, it will be understood by those skilled in the art that various changes in form and details may be made therein without departing from the scope of this invention as defined by the appended claims.

## Claims

1. A method for displaying a user interface of an electronic device, the method comprising:
displaying (701) at least one object;
detecting (703) a touch gesture on the displayed at least one object, wherein detecting the touch gesture comprises selecting the displayed at least one object located at a starting point of the touch gesture;
displaying (705) at least one proposed object in response to the detected touch gesture; and
replacing (707) the selected object with a specific object located at a touch-released point among the at least one proposed object when the touch gesture is released;
wherein displaying the at least one proposed object comprises arranging the at least one proposed object from a starting point of the touch gesture to an ending point of the touch gesture.

2. The method of claim 1, wherein the displayed at least one object indicates specific information including at least one of time, color, date, volume, and brightness information.

3. The method of claim 2, wherein displaying the at least one proposed object comprises displaying the at least one proposed object at a displaying speed depending on a speed of the touch gesture.

4. The method of claim 1, wherein displaying the at least one proposed object further comprises displaying, as the at least one proposed object, at least one object associated with the selected object.

5. The method of claim 2, further comprising:
displaying at least one object indicating time information and at least one object indicating specific information; and
changing the at least one object indicating time information, based on the at least one object indicating control information which is changed in response to a detected touch gesture on the at least one object indicating control information.

6. The method of claim 5, wherein displaying the at least one object indicating time information and the at least one object indicating control information comprises:
arranging the at least one object indicating specific information to circularly surround the at least one object indicating time information; and
displaying a at least one proposed object in response to the detected touch gesture on the at least one object indicating specific information.

7. The method of claim 1, wherein displaying the at least one object comprises:
displaying (1101) the at least one object and the at least one proposed object in a scrolling form for a first time;
after the first time elapses, fixedly displaying (1103) the at least one object and the at least one proposed object for a second time; and
after the second time elapses, displaying (1105) the at least one object only.

8. An electronic device comprising:
a memory;
a display including a touch screen; and
a processor,
wherein the processor is configured to display at least one object on the display, to detect a touch gesture on the displayed at least one object, wherein detecting the touch gesture comprises selecting the displayed at least one object located at a starting point of the touch gesture, to display at least one proposed object on the display in response to the detected touch gesture, and to replace the selected object with a specific object located at a touch-released point among the at least one proposed object when the touch gesture is released, wherein displaying the at least one proposed object comprises arranging by the processor the at least one proposed object from a starting point of the touch gesture to an ending point of the touch gesture.

9. The electronic device of claim 8, wherein the displayed at least one object indicates specific information including at least one of time, color, date, volume, and brightness information.

10. The electronic device of claim 9, wherein the processor is further configured to display the at least one proposed object at a display speed depending on a speed of the touch gesture.

11. The electronic device of claim 8, wherein the processor is further configured to display, as the at least one proposed object, at least one object associated with the selected object.

12. The electronic device of claim 9, wherein the processor is further configured to display at least one object indicating time information and at least one object indicating specific information on the display, and to change the at least one object indicating time information, based on the at least one object indicating specific information which is changed in response to a detected touch gesture on the at least one object indicating specific information.

13. The electronic device of claim 12, wherein the processor is further configured to display the object indicating specific information in a color that corresponds to a color of the corresponding object indicating time information.

14. The electronic device of claim 8, wherein the processor is further configured to display the at least one object and the at least one proposed object on the display in a scrolling form for a first time, to fixedly display, after the first time elapses, the at least one object and the at least one proposed object for a second time, and to display, after the second time elapses, the at least one object only.

## Patentansprüche

1. Verfahren zum Anzeigen einer Benutzerschnittstelle einer elektronischen Vorrichtung, wobei das Verfahren Folgendes umfasst:
Anzeigen (701) mindestens eines Objekts;
Erkennen (703) einer Berührungsgeste auf dem angezeigten mindestens einen Objekt, wobei das Erkennen der Berührungsgeste das Auswählen des angezeigten mindestens einen Objekts umfasst, das sich an einem Startpunkt der Berührungsgeste befindet;
Anzeigen (705) mindestens eines vorgeschlagenen Objekts als Reaktion auf die erkannte Berührungsgeste; und
Ersetzen (707) des ausgewählten Objekts durch ein spezifisches Objekt, das sich an einem Berührungsfreigabepunkt unter dem mindestens einen vorgeschlagenen Objekt befindet, wenn die Berührungsgeste freigegeben wird;
wobei das Anzeigen des mindestens einen vorgeschlagenen Objekts das Anordnen des mindestens einen vorgeschlagenen Objekts von einem Startpunkt der Berührungsgeste zu einem Endpunkt der Berührungsgeste umfasst.

2. Verfahren nach Anspruch 1, wobei das angezeigte mindestens eine Objekt spezifische Informationen anzeigt, die mindestens eine von Zeit-, Farb-, Datums-, Volumen- und Helligkeitsinformationen beinhalten.

3. Verfahren nach Anspruch 2, wobei das Anzeigen des mindestens einen vorgeschlagenen Objekts das Anzeigen des mindestens einen vorgeschlagenen Objekts bei einer Anzeigegeschwindigkeit in Abhängigkeit von einer Geschwindigkeit der Berührungsgeste umfasst.

4. Verfahren nach Anspruch 1, wobei das Anzeigen des mindestens einen vorgeschlagenen Objekts ferner das Anzeigen, als das mindestens eine vorgeschlagene Objekt, mindestens eines Objekts umfasst, das dem ausgewählten Objekt zugeordnet ist.

5. Verfahren nach Anspruch 2, ferner umfassend:
Anzeigen mindestens eines Objekts, das Zeitinformationen anzeigt, und mindestens eines Objekts, das spezifische Informationen anzeigt; und
Verändern des mindestens einen Objekts, das Zeitinformationen anzeigt, basierend auf dem mindestens einen Objekt, das Steuerinformationen anzeigt, die als Reaktion auf eine erkannte Berührungsgeste auf dem mindestens einen Objekt, das Steuerinformationen anzeigt, verändert werden.

6. Verfahren nach Anspruch 5, wobei das Anzeigen des mindestens einen Objekts, das Zeitinformationen anzeigt, und des mindestens einen Objekts, das Steuerinformation anzeigt, Folgendes umfasst:
Anordnen des mindestens einen Objekts, das spezifische Informationen anzeigt, um das mindestens eine Objekt, das Zeitinformationen anzeigt, kreisförmig zu umgeben; und
Anzeigen mindestens eines vorgeschlagenen Objekts als Reaktion auf die erkannte Berührungsgeste auf dem mindestens einen Objekt, das spezifische Informationen anzeigt.

7. Verfahren nach Anspruch 1, wobei das Anzeigen des mindestens einen Objekts Folgendes umfasst:
Anzeigen (1101) des mindestens einen Objekts und des mindestens einen vorgeschlagenen Objekts in einer Scroll-Form zum ersten Mal;
nach Ablauf der ersten Zeit, festes Anzeigen (1103) des mindestens einen Objekts und des mindestens einen vorgeschlagenen Objekts zum zweiten Mal; und
nach Ablauf der zweiten Zeit Anzeigen (1105) nur des mindestens einen Objekts.

8. Elektronische Vorrichtung, umfassend:
einen Speicher;
eine Anzeige mit einem Berührungsbildschirm; und
einen Prozessor,
wobei der Prozessor konfiguriert ist, mindestens ein Objekt auf der Anzeige anzuzeigen, um eine Berührungsgeste auf dem angezeigten mindestens einen Objekt zu erkennen, wobei das Erkennen der Berührungsgeste das Auswählen des angezeigten mindestens einen Objekts umfasst, das sich an einem Startpunkt der Berührungsgeste befindet, um mindestens ein vorgeschlagenes Objekt auf der Anzeige als Reaktion auf die erkannte Berührungsgeste anzuzeigen und das ausgewählte Objekt durch ein spezifisches Objekt zu ersetzen, das sich an einem Berührungsfreigabepunkt unter dem mindestens einen vorgeschlagenen Objekt befindet, wenn die Berührungsgeste freigegeben wird, wobei das Anzeigen des mindestens einen vorgeschlagenen Objekts das Anordnen des mindestens einen vorgeschlagenen Objekts durch den Prozessor von einem Startpunkt der Berührungsgeste bis zu einem Endpunkt der Berührungsgeste umfasst.

9. Elektronische Vorrichtung nach Anspruch 8, wobei das angezeigte mindestens eine Objekt spezifische Informationen anzeigt, die mindestens eine von Zeit-, Farb-, Datums-, Volumen- und Helligkeitsinformationen beinhalten.

10. Elektronische Vorrichtung nach Anspruch 9, wobei der Prozessor ferner konfiguriert ist, das mindestens eine vorgeschlagene Objekt bei einer Anzeigegeschwindigkeit in Abhängigkeit von einer Geschwindigkeit der Berührungsgeste anzuzeigen.

11. Elektronische Vorrichtung nach Anspruch 8, wobei der Prozessor ferner konfiguriert ist, als das mindestens eine vorgeschlagene Objekt, mindestens ein Objekt anzuzeigen, das dem ausgewählten Objekt zugeordnet ist.

12. Elektronische Vorrichtung nach Anspruch 9, wobei der Prozessor ferner konfiguriert ist, mindestens ein Objekt, das Zeitinformationen anzeigt, und mindestens ein Objekt, das spezifische Informationen anzeigt, auf der Anzeige anzuzeigen und das mindestens eine Objekt, das Zeitinformationen anzeigt, basierend auf dem mindestens einen Objekt zu verändern, das spezifische Informationen anzeigt, die als Reaktion auf eine erkannte Berührungsgeste auf dem mindestens einen Objekt verändert wird, die spezifische Informationen anzeigt.

13. Elektronische Vorrichtung nach Anspruch 12, wobei der Prozessor ferner konfiguriert ist, das Objekt anzuzeigen, das spezifische Steuerinformationen in einer Farbe anzeigt, die einer Farbe des entsprechenden Objekts entspricht, das Zeitinformationen anzeigt.

14. Elektronische Vorrichtung nach Anspruch 8, wobei der Prozessor ferner konfiguriert ist, das mindestens eine Objekt und das mindestens eine vorgeschlagene Objekt auf der Anzeige in einer Scroll-Form zum ersten Mal anzuzeigen, nach Ablauf der ersten Zeit das mindestens eine Objekt und das mindestens eine vorgeschlagene Objekt zum zweiten Mal anzuzeigen und nach Ablauf der zweiten Zeit nur das mindestens eine Objekt anzuzeigen.

## Revendications

1. Procédé d'affichage d'une interface utilisateur d'un dispositif électronique, le procédé comprenant :
l'affichage (701) d'au moins un objet ;
la détection (703) d'un geste de toucher sur l'au moins un objet affiché, dans lequel la détection du geste de toucher comprend la sélection de l'au moins un objet affiché situé à un point de début du geste de toucher ;
l'affichage (705) d'au moins un objet proposé en réponse au geste de toucher détecté ; et
le remplacement (707) de l'objet sélectionné par un objet spécifique situé à un point de relâchement de toucher parmi l'au moins un objet proposé lorsque le geste de toucher est relâché ;
dans lequel l'affichage de l'au moins un objet proposé comprend l'agencement de l'au moins un objet proposé depuis un point de début du geste de toucher jusqu'à un point de fin du geste de toucher.

2. Procédé selon la revendication 1, dans lequel l'au moins un objet affiché indique des informations spécifiques comprenant au moins l'une d'informations de temps, de couleur, de date, de volume et de luminosité.

3. Procédé selon la revendication 2, dans lequel l'affichage de l'au moins un objet proposé comprend l'affichage de l'au moins un objet proposé à une vitesse d'affichage en fonction d'une vitesse du geste de toucher.

4. Procédé selon la revendication 1, dans lequel l'affichage de l'au moins un objet proposé comprend en outre l'affichage, en tant que l'au moins un objet proposé, d'au moins un objet associé à l'objet sélectionné.

5. Procédé selon la revendication 2, comprenant en outre :
l'affichage d'au moins un objet indiquant des informations de temps et d'au moins un objet indiquant des informations spécifiques ; et
le changement de l'au moins un objet indiquant des informations de temps, sur la base de l'au moins un objet indiquant des informations de commande qui est changé en réponse à un geste de toucher détecté sur l'au moins un objet indiquant des informations de commande.

6. Procédé selon la revendication 5, dans lequel l'affichage de l'au moins un objet indiquant des informations de temps et de l'au moins un objet indiquant des informations de commande comprend :
l'agencement de l'au moins un objet indiquant des informations spécifiques pour entourer circulairement l'au moins un objet indiquant des informations de temps ; et
l'affichage d'au moins un objet proposé en réponse au geste de toucher détecté sur l'au moins un objet indiquant des informations spécifiques.

7. Procédé selon la revendication 1, dans lequel l'affichage de l'au moins un objet comprend :
l'affichage (1101) de l'au moins un objet et de l'au moins un objet proposé sous une forme en défilement pendant un premier temps ;
à l'expiration du premier temps, l'affichage fixe (1103) de l'au moins un objet et de l'au moins un objet proposé pendant un deuxième temps ; et
à l'expiration du deuxième temps, l'affichage (1105) uniquement de l'au moins un objet.

8. Dispositif électronique comprenant :
une mémoire ;
un affichage comprenant un écran tactile ; et
un processeur,
dans lequel le processeur est configuré pour effectuer l'affichage d'au moins un objet sur l'affichage, la détection d'un geste de toucher sur l'au moins un objet affiché, dans lequel la détection du geste de toucher comprend la sélection de l'au moins un objet affiché situé à un point de début du geste de toucher, l'affichage d'au moins un objet proposé sur l'affichage en réponse au geste de toucher détecté, et le remplacement de l'objet sélectionné par un objet spécifique situé à un point de relâchement de toucher parmi l'au moins un objet proposé lorsque le geste de toucher est relâché, dans lequel l'affichage de l'au moins un objet proposé comprend l'agencement par le processeur de l'au moins un objet proposé depuis un point de début du geste de toucher jusqu'à un point de fin du geste de toucher.

9. Dispositif électronique selon la revendication 8, dans lequel l'au moins un objet affiché indique des informations spécifiques comprenant au moins l'une d'informations de temps, de couleur, de date, de volume et de luminosité.

10. Dispositif électronique selon la revendication 9, dans lequel le processeur est en outre configuré pour effectuer l'affichage de l'au moins un objet proposé à une vitesse d'affichage en fonction d'une vitesse du geste de toucher.

11. Dispositif électronique selon la revendication 8, dans lequel le processeur est en outre configuré pour effectuer l'affichage, en tant que l'au moins un objet proposé, d'au moins un objet associé à l'objet sélectionné.

12. Dispositif électronique selon la revendication 9, dans lequel le processeur est en outre configuré pour effectuer l'affichage d'au moins un objet indiquant des informations de temps et d'au moins un objet indiquant des informations spécifiques sur l'affichage, et le changement de l'au moins un objet indiquant des informations de temps, sur la base de l'au moins un objet indiquant des informations spécifiques qui est changé en réponse à un geste de toucher détecté sur l'au moins un objet indiquant des informations spécifiques.

13. Dispositif électronique selon la revendication 12, dans lequel le processeur est en outre configuré pour effectuer l'affichage de l'objet indiquant des informations spécifiques dans une couleur qui correspond à une couleur de l'objet correspondant indiquant des informations de temps.

14. Dispositif électronique selon la revendication 8, dans lequel le processeur est en outre configuré pour effectuer l'affichage de l'au moins un objet et de l'au moins un objet proposé sous une forme en défilement pendant un premier temps, l'affichage fixe, à l'expiration du premier temps, de l'au moins un objet et de l'au moins un objet proposé pendant un deuxième temps, et l'affichage uniquement de l'au moins un objet, à l'expiration du deuxième temps.
